# EUROPEAN PATENT SPECIFICATION

(11) **EP 3 384 642 B1**
(45) Date of publication and mention of the grant of the patent: **31.03.2021**
(21) Application number: 16816503.3
(22) Date of filing: 29.11.2016
(51) Int. Cl.: H04L 12/745, H04L 12/743, H04L 12/715, H04L 12/741

(54) **FORWARDING TABLE COMPRESSION**
WEITERLEITUNGSTABELLENKOMPRIMIERUNG
COMPRESSION DE TABLE D'ACHEMINEMENT

(30) Priority: 30.11.2015 US 201514953626
(43) Date of publication of application: 10.10.2018
(73) Proprietor: Netflix, Inc., Los Gatos, California 95032 (US)
(72) Inventor: BANNISTER, David, Los Gatos, California 95032 (US)
(74) Representative: D Young & Co LLP
(86) International application number: PCT/US2016/063982
(87) International publication number: WO 2017/095801

(56) References cited:
- US-B1- 7 453 883
- US-B1- 7 903 666
- US-B2- 7 782 874
- WHITE CISCO SYSTEMS S HARES NEXTHOP TECHNOLOGIES T HARDIE R: "Bounding Longer Routes to Remove TE; draft-white-bounded-longest-match-02.txt", BOUNDING LONGER ROUTES TO REMOVE TE; DRAFT-WHITE-BOUNDED-LONGEST-MATCH-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 31 July 2008 (2008-07-31), XP015060111,

## Description

### BACKGROUND OF THE INVENTION

### Field of the Invention

The present invention relates generally to computer networking and, more specifically, to forwarding table compression.

### Description of the Related Art

Conventional digital content distribution systems include content servers, control servers, endpoint devices, and a communications network connecting the content servers to the endpoint devices. The content servers typically belong to one or more content delivery networks and are configured to store files corresponding to different content assets that can be downloaded from the content server to the endpoint devices.

In general, the control servers are responsible for managing the delivery of content assets to the endpoint devices in response to requests for such content assets transmitted from the endpoint devices. In order to respond to requests for files received from endpoint devices, one or more routers associated with the content servers are configured to communicate with the control server to determine the location and availability of requested files. The files are then distributed to the appropriate endpoint device from the router(s) and/or via a broader content distribution network.

Various techniques are implemented by a router to determine how to route each file through the communications network to the appropriate endpoint device. For example, in hop-by-hop transport techniques, each router includes a routing table (e.g., a routing information base or "RIB") that stores information associated with the topology of the communications network. More specifically, the routing table typically stores, for each valid destination node, the network address of the next device (the "next hop") to which a data packet can be transmitted in order to reach to the destination node. Each time a router learns a new route along which data packets can be transmitted towards a destination node, the new route is added to the routing table. Additionally, when the router determines that a particular destination node has become unreachable, that destination node may be removed from the routing table.

The routing table is typically stored in random access memory (RAM) and/or on a non-volatile storage device, such as a hard-disk drive (HDD) or a solid-state drive (SSD), within the router. As a result, as more and more routes are added to the routing table, the latency associated with searching the routing table for the next hop for a particular destination node increases. Consequently, routing information stored in the routing table is written into a forwarding table (e.g., a forwarding information base or "FIB"), which is implemented in high-speed memory, such as ternary content-addressable memory (TCAM). In addition, to further increase searching efficiency, routing information may be stored in the forwarding table in a tree structure (e.g., a radix tree structure), enabling the next hop and other information associated with a destination node to be quickly retrieved by searching the FIB for a prefix associated with the destination node.

As discussed above, the forwarding table enables next hops and other routing information to be retrieved efficiently and without significant latency. However, due to the price and complexity of the high-speed memory in which the forwarding table is implemented, increasing the storage capacity of the forwarding table above certain thresholds becomes cost prohibitive for many applications. As a result, as the size and complexity of the Internet has increased, the number of destination nodes stored in the routing table has exceeded the number of entries available in the forwarding table included in many routers. Consequently, such routers are unable to store routes for all destination nodes included in the Internet routing table and/or may spillover routes for excess destination nodes into slower memory, such as RAM.

US 7903666 discloses a method and system for compressing route entries in a route table based on equal-cost multi-paths (ECMPS) matches. US 7453883 discloses a method for a router having a routing table and a forwarding table which includes creating an entry for use in the forwarding table, the entry corresponding to multiple entries of the routing table.

As the foregoing illustrates, what is needed in the art is a more efficient way to store routing information associated with a communications network.

### SUMMARY OF THE INVENTION

One embodiment of the present invention sets forth a method for compressing a forwarding table. The method includes storing a first network prefix and a first set of routing information associated with the first network prefix in a routing table, and writing the first network prefix from the routing table to a first entry included in a forwarding table. The method further includes storing a second network prefix and a second set of routing information associated with the second network prefix in the routing table. The second network prefix is covered by the first network prefix. The method further includes, based on comparing the first set of routing information to the second set of routing information, determining that the second network prefix should not be written from the routing table to the forwarding table, or removing the second network prefix from the forwarding table.

Further embodiments provide, among other things, a non-transitory computer-readable medium and a networking device configured to implement the method set forth above.

One advantage of the disclosed techniques is that the number of entries included in a forwarding table can be reduced without discarding routing information associated with the destination nodes tracked by the forwarding table. As a result, a greater number of routes may be stored in the forwarding table and/or the memory requirements of the forwarding table may be reduced

The invention is defined by the appended independent claims and further embodiments are described by the dependent claims. Any reference to inventions or embodiments not falling within the scope of the independent claims are to be interpreted as examples useful for understanding the invention.

### BRIEF DESCRIPTION OF THE DRAWINGS

Figure 1 illustrates a network infrastructure configured to implement one or more aspects of the present invention;
Figure 2A is a more detailed block diagram of the content server of Figure 1, according to various embodiments of the present invention;
Figure 2B is a more detailed block diagram of the networking device of Figure 2A, according to various embodiments of the present invention;
Figure 3 is a more detailed block diagram of the control server of Figure 1, according to various embodiments of the present invention;
Figures 4A and 4B illustrate a flow diagram of method steps for compressing a forwarding table, according to various embodiments of the present invention; and
Figures 5A-5E illustrate entries of a tree structure stored within the forwarding table included in the networking device of Figure 2B, according to various embodiments of the present invention.

### DETAILED DESCRIPTION

In the following description, numerous specific details are set forth to provide a more thorough understanding of the embodiments of the present invention. However, it will be apparent to one of skill in the art that the embodiments of the present invention may be practiced without one or more of these specific details.

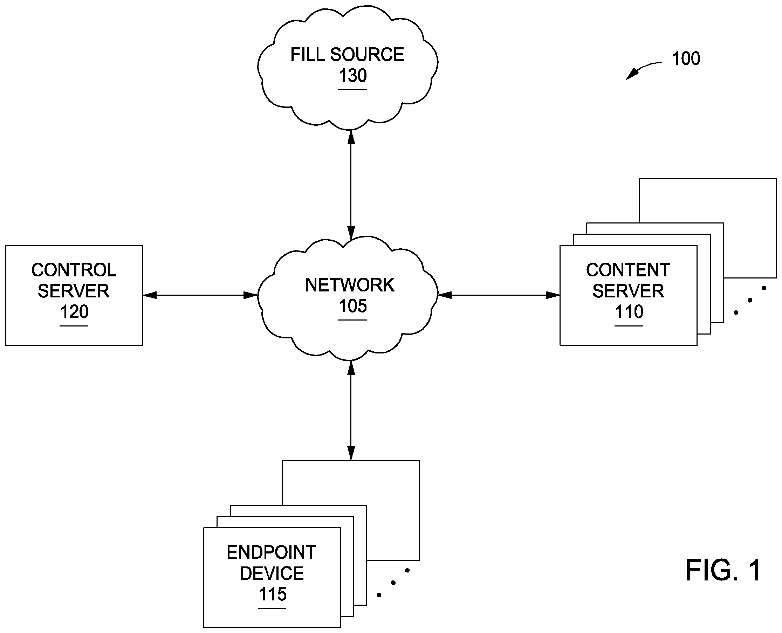

Figure 1 illustrates a network infrastructure 100 configured to implement one or more aspects of the present invention. As shown, the network infrastructure 100 includes content servers 110, a control server 120, and endpoint devices 115, each of which are connected via a communications network 105.

Each endpoint device 115 communicates with one or more content servers 110 (also referred to as "caches" or "nodes") via the network 105 to download content, such as textual data, graphical data, audio data, video data, and other types of data. The downloadable content, also referred to herein as a "file," is then transferred between one or more content servers 110 and/or presented to users of one or more endpoint devices 115. In various embodiments, the endpoint devices 115 may include computer systems, set top boxes, mobile computer, smartphones, tablets, console and handheld video game systems, digital video recorders (DVRs), DVD players, connected digital TVs, dedicated media streaming devices, (e.g., the Roku® set-top box), and/or any other technically feasible computing platform that has network connectivity and is capable of presenting content, such as text, images, video, and/or audio content, to a user.

Each content server 110 may include a web-server, database, and server application 217 configured to communicate with the control server 120 to determine the network location and availability of various files that are tracked and managed by the control server 120. Each content server 110 may further communicate with a fill source 130 and one or more other content servers 110 in order "fill" each content server 110 with copies of various files. In addition, content servers 110 may respond to requests for files received from endpoint devices 115. The files may then be distributed from the content server 110 or via a broader content distribution network. In some embodiments, the content servers 110 enable users to authenticate (e.g., using a username and password) in order to access files stored on the content servers 110. Although only a single control server 120 is shown in Figure 1, in various embodiments multiple control servers 120 may be implemented to track and manage files.

In various embodiments, the fill source 130 may include an online storage service (e.g., Amazon® Simple Storage Service, Google® Cloud Storage, etc.) in which a catalog of files, including thousands or millions of files, is stored and accessed in order to fill the content servers 110. Although only a single fill source 130 is shown in Figure 1, in various embodiments, multiple fill sources 130 may be implemented to service requests for files.

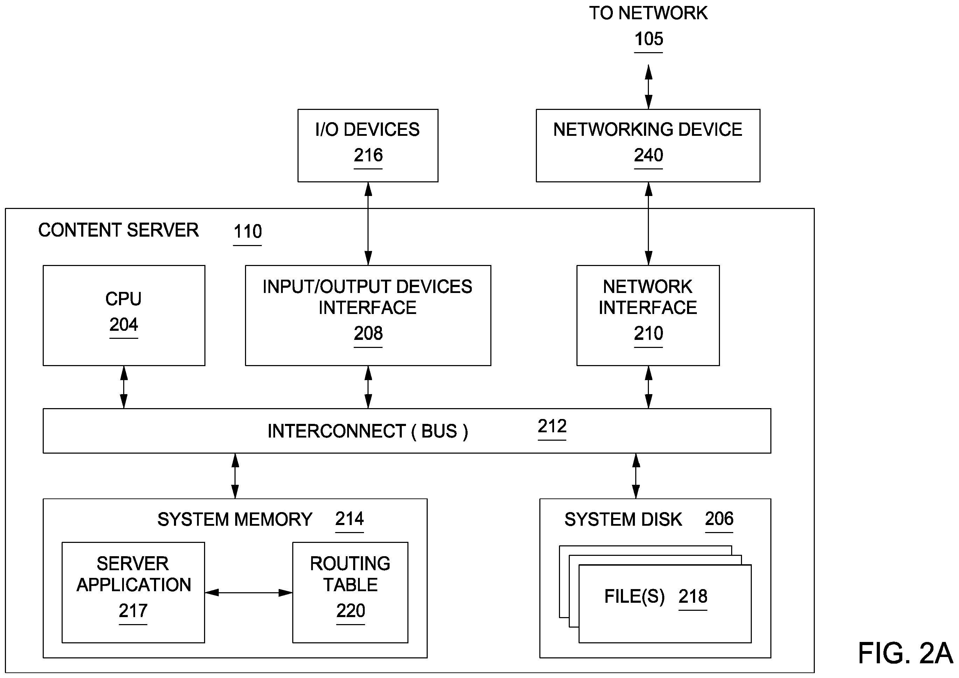

Figure 2A is a more detailed block diagram of the content server 110 of Figure 1, according to various embodiments of the present invention. As shown, the content server 110 includes, without limitation, a central processing unit (CPU) 204, a system disk 206, an input/output (I/O) devices interface 208, a network interface 210, an interconnect 212, and a system memory 214. In various embodiments, the content server 110 communicates with other nodes on the network 105 via a networking device 240.

The CPU 204 is configured to retrieve and execute programming instructions, such as server application 217, stored in the system memory 214. Similarly, the CPU 204 is configured to store application data and retrieve application data from the system memory 214. The interconnect 212 is configured to facilitate transmission of data, such as programming instructions and application data, between the CPU 204, the system disk 206, I/O devices interface 208, the network interface 210, and the system memory 214. The I/O devices interface 208 is configured to receive input data from I/O devices 216 and transmit the input data to the CPU 204 via the interconnect 212. For example, I/O devices 216 may include one or more buttons, a keyboard, a mouse, and/or other input devices. The I/O devices interface 208 is further configured to receive output data from the CPU 204 via the interconnect 212 and transmit the output data to the I/O devices 216.

The system disk 206 may include one or more hard disk drives, solid state storage devices, or similar storage devices. The system disk 206 is configured to store non-volatile data such as files 218 (e.g., audio files, video files, etc.) associated with a content catalog. The files 218 can then be retrieved by one or more content servers 110 and/or one or more endpoint devices 115 via the network 105. In some embodiments, the network interface 210 may be configured to operate in compliance with the Ethernet standard.

The system memory 214 includes a server application 217 configured to service requests for files 218 received from endpoint devices 115 and other content servers 110. When the server application 217 receives a request for a file 218, the server application 217 retrieves the corresponding file 218 from the system disk 206 and transmits the file 218 to an endpoint device 115 or a content server 110 via the network 105.

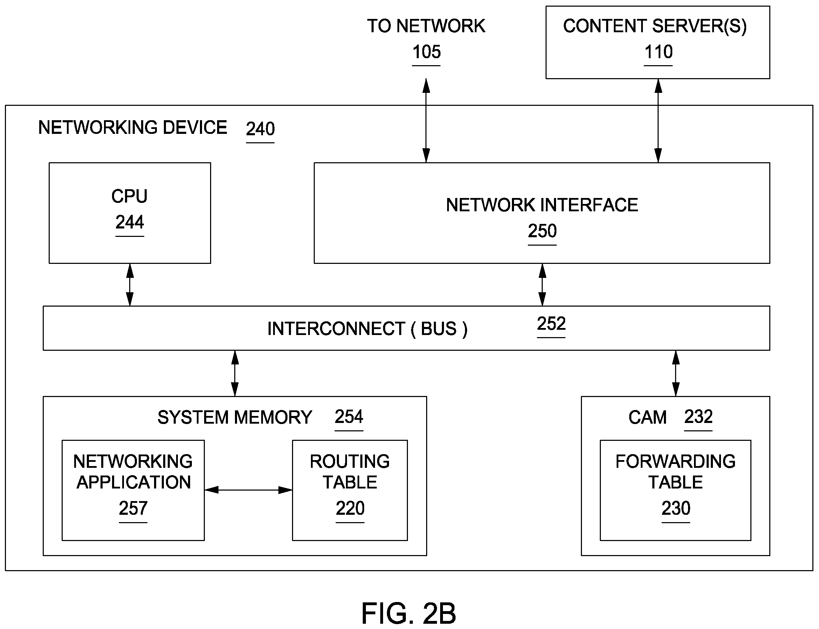

Figure 2B is a more detailed block diagram of the networking device 240 of Figure 2A, according to various embodiments of the present invention. As shown, the networking device 240 includes, without limitation, a central processing unit (CPU) 244, a network interface 250, an interconnect 252, a system memory 254, and a content-addressable memory (CAM) 232.

The CPU 244 is configured to retrieve and execute programming instructions, such as networking application 257, stored in the system memory 254. Similarly, the CPU 244 is configured to store application data and retrieve application data from the system memory 254. The interconnect 252 is configured to facilitate transmission of data, such as programming instructions and application data, between the CPU 244, the network interface 250, the system memory 254, and the CAM 232.

The system memory 254 includes a networking application 257 configured to receive and transmit data (e.g., files 218) and/or routing information, such as the destination nodes to which a particular file 218 should be transmitted, via the network 105. In some embodiments, the networking application 257 communicates with one or more transit providers (TPs) and/or the control server 120 to determine routing information associated with destination nodes included in the network 105.

In various embodiments, the networking device 240 is implemented as one or more routers. In such embodiments, the networking application 257 implements a gateway protocol (e.g., border gateway protocol or "BGP") to receive, process, and transmit network routing information, such as the network addresses of nodes (e.g., content servers 110, control servers 120, endpoint devices 115, fill sources 130, etc.) included in the network 105. In some embodiments, the content servers 110, control servers 120, endpoint devices 115, and/or fill sources 130 form one or more autonomous systems (AS), each of which may be managed via a separate gateway service (e.g., a BGP service).

The gateway service implemented by the networking application 257 may receive network topology information associated with all advertised nodes included in the network 105. The network topology information may include a network address for each of the destination nodes as well as the network address of the "next hop" (NH) to which a data packet can be transmitted in order to reach to a particular node in the network 105. The networking application 257 then stores the network addresses, the NHs, and other types of routing information in a routing table 220 (e.g., a routing information base or "RIB"). The networking application 257 may further determine whether each of the nodes in the network 105 is reachable and store this information in the routing table 220.

Each time networking application 257 receives a new route along which data packets can be transmitted towards a particular node in the network 105, the new route may be added to the routing table 220. Additionally, when the router determines that a particular node has become unreachable, the network address and routing information associated with that node may be removed from the routing table 220. In some embodiments, the routing table 220 stores, for each destination node, the network address of the destination node and routing information associated with the destination node, such as one or more NHs, one or more autonomous system numbers (ASNs) associated with the NH(s), a time value associated with each NH(s), and other types of attributes associated with specific NHs and/or ASNs. The network address and/or NH(s) associated with each node may be stored in the routing table 220 in any format. For example, the network address and/or NH(s) may be stored in the Internet Protocol version 4 (IPv4) format, the Internet Protocol version 6 (IPv6) format, as a network address prefix (e.g., /8, /16, /24, etc.) associated with a particular format, and/or in any other technically feasible format.

As more and more routes are added to the routing table 220, the latency associated with searching the routing table 220 for the NH(s) for a particular destination node increases. Consequently, the networking application 257 writes the routes into a forwarding table 230 (e.g., a forwarding information base or "FIB") included in the network interface 210. In contrast to the routing table 220, which may be stored in system memory 214, the forwarding table 230 may be implemented in a high-speed memory (e.g., a ternary content-addressable memory or "TCAM"). In some embodiments, the high-speed memory includes an application-specific integrated circuit (ASIC) configured to perform lookup operations on the contents of the forwarding table 230.

Further, to enable the forwarding table 230 to be more efficiently searched, network addresses associated with the destination nodes may be stored in the forwarding table 230 in a tree structure (e.g., a radix tree structure). In some embodiments, the networking application 257 writes a route from the routing table 220 to the forwarding table 230 by reading a network address from the routing table 220, storing a network prefix associated with the network address in an entry of the forwarding table 230, and associating the corresponding routing information with the entry. For example, the networking application 257 may store a network prefix associated with the network address of a destination node in an entry of a radix tree included in the forwarding table 230. The networking application 257 may then store the corresponding routing information in the forwarding table 230 and link the routing information to the entry (e.g., via a pointer).

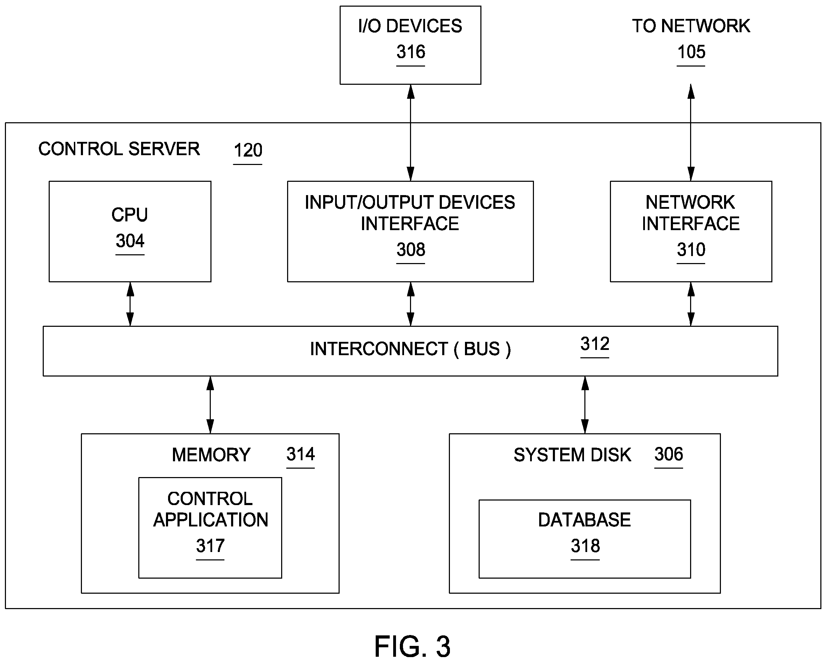

Figure 3 is a more detailed block diagram of the control server 120 of Figure 1, according to various embodiments of the present invention. As shown, the control server 120 includes, without limitation, a central processing unit (CPU) 304, a system disk 306, an input/output (I/O) devices interface 308, a network interface 310, an interconnect 312, and a system memory 314.

The CPU 304 is configured to retrieve and execute programming instructions, such as control application 317, stored in the system memory 314. Similarly, the CPU 304 is configured to store application data and retrieve application data from the system memory 314 and a database 318 stored in the system disk 306. The interconnect 312 is configured to facilitate transmission of data between the CPU 304, the system disk 306, I/O devices interface 308, the network interface 310, and the system memory 314. The I/O devices interface 308 is configured to transmit input data and output data between the I/O devices 316 and the CPU 304 via the interconnect 312. The system disk 306 may include one or more hard disk drives, solid state storage devices, and the like. The system disk 206 is configured to store a database 318 of information associated with the content servers 110, the fill source(s) 130, and the files 218.

The system memory 314 includes a control application 317 configured to receive requests for files 218 from one or more endpoint devices 115 and/or one or more content servers 110. The control application 317 may then access information stored in the database 318 and process the information to determine the manner in which specific files 218 transmitted to endpoint devices 115 and/or replicated across the content servers 110. The control application 317 may further generate licenses for files 218 requested by the endpoint devices 115.

### Forwarding Table Compression

As described above, the forwarding table 230 enables NHs and other routing information associated with destination nodes to be retrieved efficiently and without significant latency. However, due to the price and complexity of the high-speed memory used to implement the forwarding table 230, increasing the storage capacity of the forwarding table 230 above certain thresholds becomes cost prohibitive for many applications. As a result, as the number of nodes advertised on the Internet has increased, the number of nodes stored in the routing table has exceeded the number of entries available in the forwarding table included in many routers.

For example, many commercial routers include a content-addressable memory (CAM) capable of storing 512,000 entries. However, the Internet routing table currently includes routes for approximately 550,000 destination nodes. Consequently, many routers are unable to store routes for all advertised destination nodes and/or may spillover routes for excess destination nodes into slower memory, such as the system memory 214, decreasing router performance.

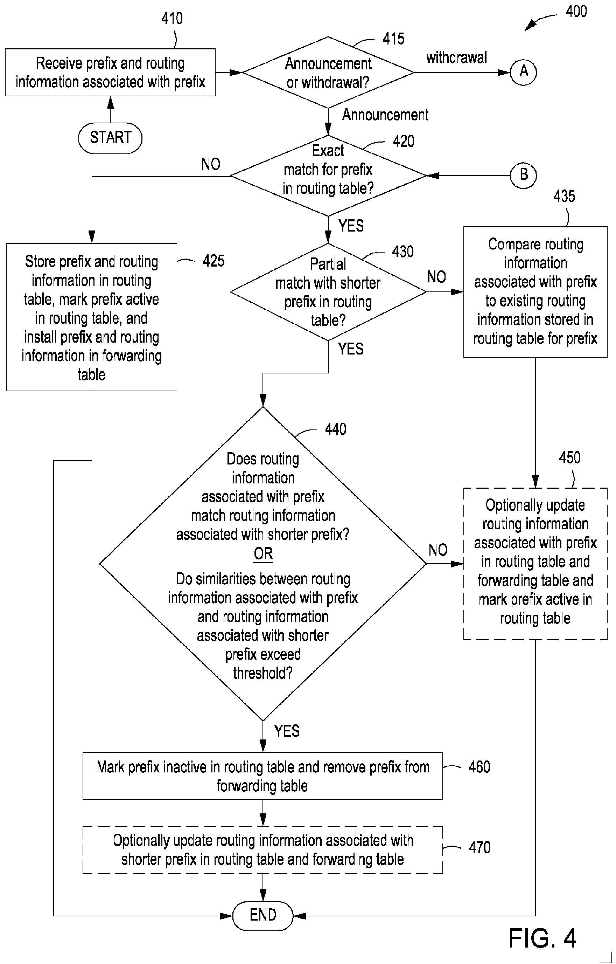

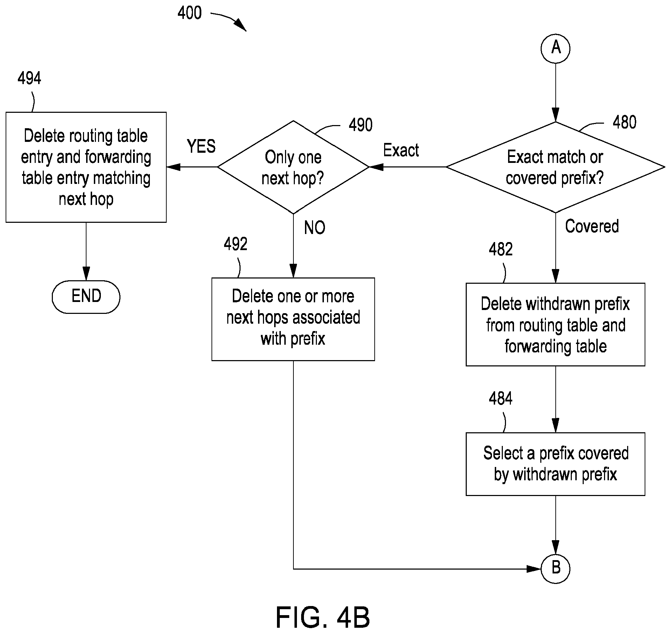

Accordingly, in various embodiments, the networking application 257 compresses the contents of the forwarding table 230 by analyzing the NH(s) and/or other types of routing information associated with two or more destination nodes and determining whether the NH(s) and/or other routing information can be collapsed into a single entry associated with a single network prefix. Such techniques are described below in further detail in conjunction with Figures 4-5E.

Figures 4A and 4B illustrate a flow diagram of method steps for compressing a forwarding table 230, according to various embodiments of the present invention. Although the method steps are described in conjunction with the systems of Figures 1-3 and 5A-5E, persons skilled in the art will understand that any system configured to perform the method steps, in any order, falls within the scope of the present invention.

As shown in Figure 4A, a method 400 begins at step 410, where the networking application 257 receives a network prefix and routing information associated with the network prefix. In some embodiments, the network prefix is associated with a destination node included in the network 105, such as a specific content server 110, control server 120, endpoint device 115, or fill source 130. In general, the routing information may include any type of information associated with the topology and/or status of the network 105 and/or a destination node within the network 105. Examples of routing information include, without limitation, NHs, the ASNs associated with NH(s), and time values associated with NHs.

In some embodiments, a network prefix is received by the networking application 257, at step 410, when the gateway service discovers a new destination node in the network 105, such as by receiving a listing of routes from a transit provider (TP). In other embodiments, a network prefix is received by the networking application 257 when the networking application 257 performs a covered lookup based on a specific network prefix. For example, the networking application 257 may perform a covered lookup on the routing table 220 and/or forwarding table 230 based on a /16 network prefix (e.g., 10.1.0.0/16) and, in response, receive all of the /24 network prefixes (e.g., 10.1.1.0/24) that include (i.e., are "covered" by) the /16 network prefix.

Additionally or alternatively, in various embodiments, a network prefix may be received by the networking application 257 from the control application 317 included in the control server 120. For example, the control application 317 could receive a request for a file 218 from an endpoint device 115, determine a network address associated with the endpoint device 115, and transmit the network address and/or a network prefix associated with the endpoint 115 to the networking application 257. In some embodiments, the control application 317 may include a content control system (CCS) implemented via a cloud computing service, such as Amazon Web Services® (AWS). Accordingly, in such embodiments, the control application 317 may generate a license for the requested file 218 before or after transmitting the network address and/or network prefix associated with the endpoint 115 to the networking application 257.

At step 415, the networking application 257 determines whether the network prefix is a prefix announcement or a prefix withdrawal. If the networking application 257 determines that the network prefix is a prefix withdrawal then, the method 400 proceeds to step 480, shown in Figure 4B. If, on the other hand, the networking application 257 determines that the network prefix is a prefix announcement then, the method 400 proceeds to step 420.

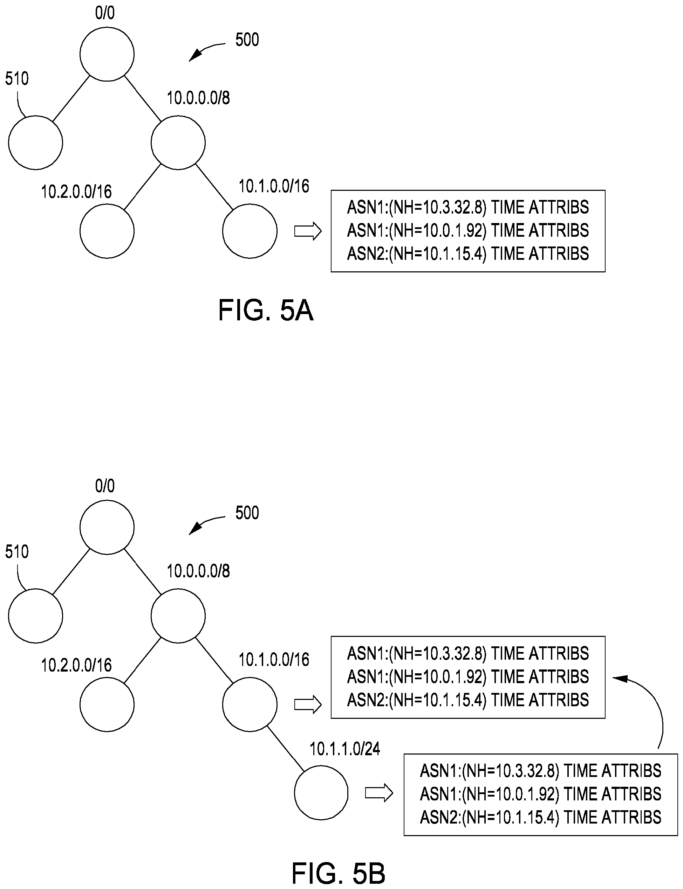

Next, at step 420, the networking application 257 performs a lookup on the routing table 220 and/or forwarding table 230 to determine whether an exact match exists for the network prefix. For example, with reference to Figure 5A, which illustrates entries 510 of a tree structure 500 stored within the forwarding table 230, the networking application 257 could perform a lookup on the forwarding table 230 to determine whether an entry 510 exists for 10.1.1.0/24. If an exact match for the network prefix does not exist, then the method 400 proceeds to step 425.

At step 425, the networking application 257 stores the network prefix and associated routing information in the routing table 220 and writes the network prefix and associated routing information in the forwarding table 230, as shown in Figure 5B. The networking application 257 further marks the network prefix as active in the routing table 220, indicating that the network prefix should be (or has been) written to an entry 510 of the forwarding table 230. The method 400 then terminates.

Returning to step 420, if an exact match for the network prefix exists, then the method 400 proceeds to step 430. At step 430, the networking application 257 performs a lookup on the routing table 220 and/or forwarding table 230 to determine whether a partial match exists for the network prefix. In some embodiments, the networking application 257 determines whether a partial match exists for the network prefix by looking back up the tree structure 500 to determine whether an entry 510 for a shorter, covering network prefix already exists in the tree structure 500. For example, with reference to Figure 5B, the networking application 257 could look back up the tree structure 500 to determine that an entry 510 for the 10.1.0.0/16 network prefix exists in the tree structure 500 and covers the 10.1.1.0/24 network prefix. If the networking application 257 determines that a partial match for the network prefix does not exist, then the method 400 proceeds to step 435, where the networking application 257 compares the routing information associated with the network prefix to the existing routing information stored in the routing table 220 and/or the forwarding table 230 for the network prefix.

At step 450, the networking application 257 optionally updates the routing information stored in the entry 510 associated with the network prefix based on the comparison performed at step 435. For example, if, at step 435, the networking application 257 determined that the routing information associated with the network prefix included a NH and corresponding ASN not previously included in the existing routing information stored in the entry 510 of the routing table 220, then the networking application 257 would update the routing information stored in the entry 510 to include the additional NH and ASN.

Returning to step 430, if the networking application 257 determines that a partial match exists, then the method 400 proceeds to step 440. At step 440, the networking application 257 compares the routing information associated with the network prefix to the routing information associated with the shorter network prefix to determine a result, such as whether a match exists or whether the similarities exceed a threshold value. In various embodiments, the type of comparison performed at step 440 depends on whether the networking application 257 is implementing a conservative compression technique or an aggressive compression technique.

In the conservative compression technique, at step 440, the networking application 257 determines whether the routing information associated with the network prefix matches the routing information associated with the shorter network prefix. In some embodiments, the networking application 257 determines that a match exists when the routing information associated with the network prefix and the routing information associated with the shorter network prefix include the same NHs and ASNs. Additionally or alternatively, in some embodiments, at step 440, the networking application 257 determines that a match exists when other types of the routing information are associated with both the network prefix and the shorter network prefix.

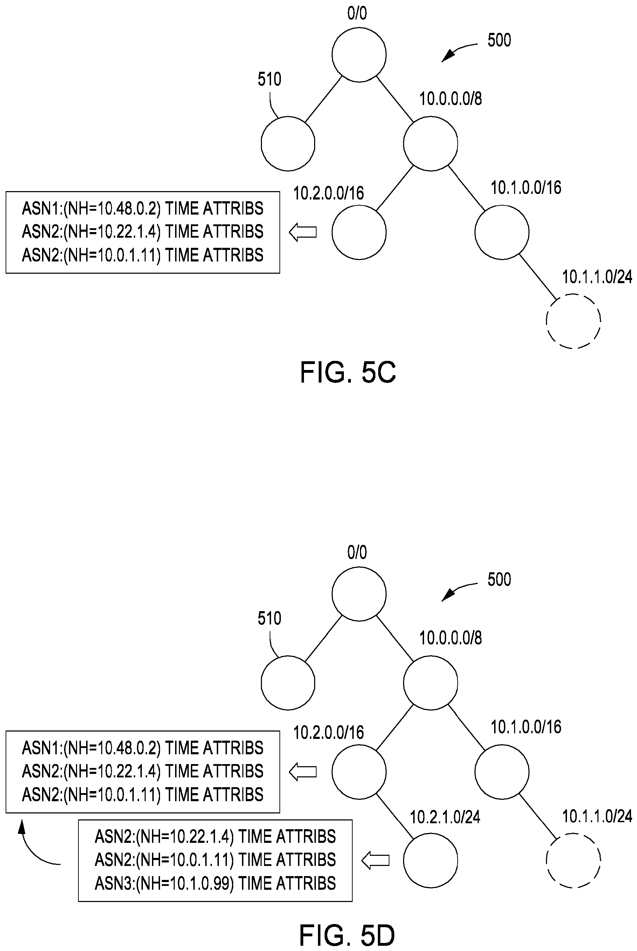

For example, as shown in Figure 5B, the networking application 257 would determine that a match exists between the routing information associated with the network prefix 10.1.1.0/24 and the routing information associated with the shorter network prefix 10.1.1.0/16, since both network prefixes are associated with the same NHs and ASNs. Consequently, the method 400 would proceed to step 460, where the networking application 257 would mark the network prefix inactive in the routing table 220 and compress the contents of the forwarding table 230 by removing the network prefix from the forwarding table 230, as shown in Figure 5C. Alternatively, in embodiments where the network prefix was not initially written at step 425, the networking application 257 would mark the network prefix inactive in the routing table 220 and compress the contents of the forwarding table 230 by determining that the network prefix will not be written in the forwarding table 230, as shown in Figure 5C.

Next, at step 470, the networking application 257 optionally updates the routing information associated with the shorter prefix to include the routing information associated with the network prefix. For example, if the routing information associated with the network prefix includes one or more NHs and/or ASNs not included in the routing information associated with the shorter network prefix, then that routing information may be associated with the forwarding table 230 entry 510 for the shorter network prefix. However, when the networking application 257 implements the conservative compression technique at step 440, the routing information associated with the shorter prefix may not be updated at step 470, since the routing information associated with the network prefix already matches the routing information stored in the entry 510 for the shorter network prefix. The method 400 then terminates.

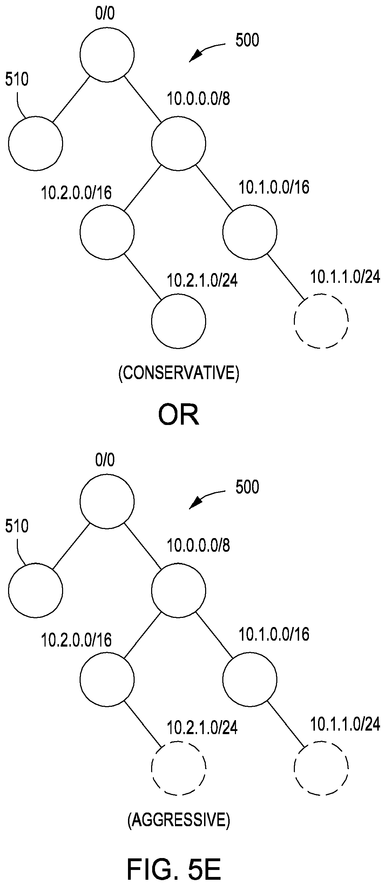

In another example, as shown in Figure 5D, if the networking application 257 receives another network prefix (10.2.1.0/24) and applies the conservative compression technique of step 440 to the network prefix and a shorter network prefix (10.2.0.0/16) determined at step 430, then the networking application 257 would determine that a match does not exist. Specifically, the routing information associated with the network prefix 10.2.1.0/24 does not match the routing information associated with the shorter network prefix 10.2.0.0/16. Consequently, the method 400 would proceed to step 450, and the network prefix 10.2.1.0/24 would not be removed from the forwarding table 230 at step 460, as shown in the upper portion of Figure 5E.

By contrast, when the networking application 257 applies the aggressive compression technique at step 440, the networking application 257 determines whether the similarities between the routing information associated with the network prefix and the routing information associated with the shorter network prefix exceed a threshold level. In some embodiments, the networking application 257 determines that the similarities exceed a threshold level when a threshold percentage (e.g., 40%, 60%, 80%, etc.) of the routing information associated with the network prefix is also associated with the shorter network prefix and/or vice versa. For example, with reference to Figure 5D, if the threshold level is set at 60%, then the networking application 257 would determine that the similarities between the routing information associated with network prefix 10.2.1.0/24 and the routing information associated with the shorter network prefix 10.2.0.0/16 exceed the threshold level, because two out of three NHs and ASNs associated with the network prefix are also associated with the shorter network prefix and/or because two out of three NHs and ASNs associated with the shorter network prefix are also associated with the network prefix.

Accordingly, if the networking application 257 implements the aggressive compression technique and a threshold level of 60% at step 440, then the method 400 would proceed to step 460. At step 460, the networking application 257 would mark the network prefix 10.2.1.0/24 inactive in the routing table 220 and compress the contents of the forwarding table 230, either by removing the network prefix from the forwarding table 230 or by not writing the network prefix in the forwarding table 230, as shown in the bottom portion of Figure 5E. The method 400 would then proceed to step 470, where the networking application 257 optionally updates the routing information associated with the shorter network prefix to include the routing information associated with the network prefix. For example, with reference to Figure 5D, the networking application 257 could determine that the routing information associated with the shorter network prefix does not include a NH for ASN3, included in the routing information associated with the longer network prefix. Accordingly, at step 470, the networking application 257 would update the routing information associated with the shorter network prefix to include the NH associated with ASN3. The method 400 would then terminate.

If, on the other hand, the networking application 257 implements the aggressive compression technique and a threshold level of 80% at step 440, then the similarities between the routing information associated with network prefix 10.2.1.0/24 and the routing information associated with the shorter network prefix 10.2.0.0/16 (about 66% similarity) would not exceed the threshold level. Consequently, the method 400 would proceed to step 450.

It is further noted that, if the networking application 257 implements the aggressive compression technique and a threshold level of 60% with respect to network prefix 10.1.1.0/24 and the shorter network prefix 10.1.0.0/16, then the method 400 would proceed to step 460, since the networking application 257 would determine a 100% similarity at step 440. Then, at step 460, the networking application 257 would mark the network prefix 10.1.1.0/24 inactive in the routing table 220 and compress the contents of the forwarding table 230, either by removing the network prefix from the forwarding table 230 or by not writing the network prefix in the forwarding table 230, as shown in Figure 5C. The method 400 would then proceed to step 470, where the networking application 257 would determine that the routing information associated with the shorter network prefix does not need to be updated. The method 400 would then terminate.

In some embodiments, at step 440, the networking application 257 implements the aggressive compression technique by applying a weighting to one or more items in the routing information. For example, the networking application 257 could retrieve a routing policy from system memory 214 and, based on the routing policy, determine that one or more ASNs are more favorable than one or more other ASNs. The networking application 257 could then apply a weighting to routing information (e.g., a NH) associated with the more favorable ASN(s) and/or apply a weighting to the less favorable ASN(s). Then, when the networking application 257 determines that routing information is not included in both the network prefix and the shorter network prefix, the weighting applied to the non-overlapping routing information may be taken into account when determining whether to collapse/aggregate the routing information associated with the network prefix and the shorter network prefix.

For example, if the networking application 257 determined that ASN3 was a more favorable ASN than ASN1 or ASN2, then the networking application 257 could assign a weighting (e.g., a weighting factor of 2) to each piece of routing information associated with ASN3. Then, with reference to Figure 5D, the networking application 257 would determine that the similarity between the routing information associated with network prefix 10.2.1.0/24 and the routing information associated with the shorter network prefix 10.2.0.0/16 is 50%. More specifically, since the NH associated with ASN3 would, in effect, count as two NHs that are not included in the routing information associated with the shorter network prefix 10.2.0.0/16 (due to the weighting factor applied to routing information associated with ASN3), the shorter network prefix 10.2.0.0/16 would be associated with only 50% of the routing information associated with the longer network prefix 10.2.1.0/24.

Returning to step 480, after the networking application 257 determines that the network prefix is to be withdrawn from the routing table 220 and forwarding table 230, the networking application 257 determines whether an exact match exists for the network prefix in the routing table 220 and/or the forwarding table 230. If an exact match exists, then the method 400 proceeds to step 490, where the networking application 257 determines whether there is more than one NH associated with the network prefix.

If, at step 490, there is more than one NH associated with the network prefix, then the networking application 257 performs a route selection process on the NHs associated with the network prefix based on one or more criteria, such as route preference and/or route efficiency. Based on the route selection process, one or more NHs associated with the network prefix may be removed from the routing table 220 and forwarding table 230. The method 400 then proceeds to step 420, described above. If the networking application 257 determines that there is only one NH associated with the network prefix, then, at step 494, the networking application 257 deletes the entry 510 associated with the NH from the routing table 220 and the forwarding table 230. The method 400 then terminates.

If, at step 480, the networking application 257 determines that the network prefix covers one or more longer network prefixes, then, at step 482, the networking application 257 deletes the withdrawn network prefix from the routing table 220 and forwarding table 230. Then, at step 484, the networking application 257 selects a longer network prefix covered by the withdrawn network prefix and the method 400 proceeds to step 420, described above. In addition, if the withdrawn network prefix covers multiple longer network prefixes, then the networking application 257 may perform steps 420 through 470 for each of the longer network prefixes.

In sum, a networking application receives a network prefix and performs a lookup on a routing table and/or forwarding table to find a partial match associated with the network prefix. If a partial match exists, then the networking application compares routing information associated with the network prefix to routing information associated with the partial match (e.g., a shorter network prefix). Based on the similarities between the routing information associated with the network prefix and the routing information associated with the partial match, the networking application then determines whether the forwarding table should be compressed by removing the network prefix from the forwarding table and aggregating the corresponding routing information in an entry associated with the partial match.

At least one advantage of the disclosed techniques is that the number of entries included in a forwarding table can be reduced without discarding routing information associated with the destination nodes tracked by the forwarding table. As a result, a greater number of routes may be stored in the forwarding table and/or the memory requirements of the forwarding table may be reduced.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A non-transitory computer-readable storage medium including instructions that, when executed by a processor, cause the processor to perform the steps of:
storing a first network prefix and a first set of routing information associated with the first network prefix in a routing table;
writing the first network prefix from the routing table to a first entry included in a forwarding table;
storing a second network prefix and a second set of routing information associated with the second network prefix in the routing table, wherein the second network prefix is covered by the first network prefix;
comparing the first set of routing information to the second set of routing information to determine whether more than a threshold number of next hops included in the second set of routing information are included in the first set of routing information;
in response to the comparison:
when the threshold number of next hops has been exceeded, compressing the forwarding table by:
not writing the second network prefix from the routing table to the forwarding table; or
removing the second network prefix from the forwarding table; and
when the threshold number of next hops has not been exceeded, writing the second network prefix from the routing table to the forwarding table.

2. The non-transitory computer-readable storage medium of claim 1, further comprising associating the at least one next hop included in the second set of routing information with the first entry included in the forwarding table based on the comparison.

3. The non-transitory computer-readable storage medium of claim 1, further comprising marking the first network prefix as active in the routing table, and, based on the comparison, marking the second network prefix as inactive in the routing table.

4. The non-transitory computer-readable storage medium of claim 1, further comprising:
storing a third network prefix and a third set of routing information associated with the third network prefix in the routing table, wherein the third network prefix is covered by a fourth network prefix included in the routing table; and
based on comparing the third set of routing information to a fourth set of routing information associated with the fourth network prefix:
writing the third network prefix from the routing table to a second entry in the forwarding table; and
associating the third set of routing information with the second entry.

5. The non-transitory computer-readable storage medium of claim 4, wherein less than a threshold number of next hops included in the third set of routing information are included in the fourth set of routing information.

6. A method, comprising:
storing a first network prefix and a first set of routing information associated with the first network prefix in a routing table;
writing the first network prefix to a first entry included in a forwarding table;
determining that the first network prefix covers a second network prefix associated with a second set of routing information; and
comparing the first set of routing information to the second set of routing information to determine whether more than a threshold number of next hops included in the second set of routing information are included in the first set of routing information;
in response to the comparison:
when the threshold number of next hops has been exceeded, compressing the forwarding table by:
not writing the second network prefix to the forwarding table; or
removing the second network prefix from the forwarding table; and
when the threshold number of next hops has not been exceeded, writing the second network prefix from the routing table to the forwarding table.

7. The method of claim 6, further comprising associating the at least one next hop with the first entry included in the forwarding table based on determining that the at least one next hop is not included in the first set of routing information.

8. The method of claim 6, wherein the comparison indicates that all next hops included in the first set of routing information match all next hops included in the second set of routing information.

9. The method of claim 6, further comprising:
marking the first network prefix as active in the routing table;
storing the second network prefix and the second set of routing information in the routing table; and
based on the comparison, marking the second network prefix as inactive in the routing table.

10. The method of claim 6, further comprising:
storing a third network prefix and a third set of routing information associated with the third network prefix in the routing table;
determining that the third network prefix is covered by a fourth network prefix included in the routing table; and
based on determining that less than all of the third set of routing information matches a fourth set of routing information associated with the fourth network prefix:
writing the third network prefix to a second entry in the forwarding table; and
associating the third set of routing information with the second entry.

11. The method of claim 10, wherein less than a threshold number of next hops included in the third set of routing information are included in the fourth set of routing information.

12. The method of claim 6, further comprising:
writing a third network prefix to a second entry included in a forwarding table;
determining that a fourth network prefix is covered by the third network prefix; and
in response to determining that at least a portion of a third set of routing information associated with the third network prefix matches at least a portion of a fourth set of routing information associated with the fourth network prefix, associating the fourth set of routing information with the second entry.

13. A networking device, comprising:
a first memory storing a routing table and a networking application;
a second memory storing a forwarding table; and
a processor coupled to the first memory and the second memory, wherein, when executed by the processor, the networking application causes the processor to:
store a first network prefix and a first set of routing information associated with the first network prefix in the routing table;
write the first network prefix from the routing table to a first entry included in the forwarding table;
store a second network prefix and a second set of routing information associated with the second network prefix in the routing table, wherein the second network prefix is covered by the first network prefix;
write the second network prefix from the routing table to a second entry included in the forwarding table;
compare the first set of routing information to the second set of routing information to determine whether more than a threshold number of next hops included in the second set of routing information are included in the first set of routing information; and
in response to the comparison,
when the threshold number of next hops has been exceeded, compress the forwarding table by removing the second entry from the forwarding table; and
when the threshold number of next hops has not been exceeded, update updating the forwarding table to include the second network prefix.

14. The networking device of claim 13, wherein the processor is further configured to associate the at least one next hop with the first entry based on the comparison.

15. The networking device of claim 13, wherein the second memory comprises a content-addressable memory, and the first entry is associated with a node of a radix tree.

## Patentansprüche

1. Nichtflüchtiges computerlesbares Speichermedium, das Anweisungen enthält, die, wenn sie von einem Prozessor ausgeführt werden, den Prozessor veranlassen, die folgenden Schritte auszuführen:
Speichern eines ersten Netzwerk-Präfixes und eines ersten Satzes von Routinginformationen, die mit dem ersten Netzwerk-Präfix verbunden sind, in einer Routingtabelle;
Schreiben des ersten Netzwerk-Präfixes von der Routingtabelle in einen ersten Eintrag, der in einer Weiterleitungstabelle enthalten ist;
Speichern eines zweiten Netzwerk-Präfixes und eines zweiten Satzes von Routinginformationen, die mit dem zweiten Netzwerk-Präfix verbunden sind, in der Routingtabelle,
wobei das zweite Netzwerk-Präfix durch das erste Netzwerk-Präfix abgedeckt wird;
Vergleichen des ersten Satzes von Routinginformationen mit dem zweiten Satz von Routinginformationen, um zu bestimmen, ob mehr als eine Schwellenzahl von nächsten Sprüngen, die in dem zweiten Satz von Routinginformationen enthalten sind, in dem ersten Satz von Routinginformationen enthalten sind;
in Reaktion auf den Vergleich:
wenn die Schwellenzahl von nächsten Sprüngen überschritten worden ist,
Komprimieren der Weiterleitungstabelle durch:
Nicht-Schreiben des zweiten Netzwerk-Präfixes von der Routingtabelle in die Weiterleitungstabelle; oder
Entfernen des zweiten Netzwerk-Präfixes von der Weiterleitungstabelle; und
wenn die Schwellenzahl von nächsten Sprüngen nicht überschritten worden ist, Schreiben des zweiten Netzwerk-Präfixes von der Routingtabelle in die Weiterleitungstabelle.

2. Nichtflüchtiges computerlesbares Speichermedium nach Anspruch 1,
das ferner das Verbinden des mindestens einen nächsten Sprungs, der in dem zweiten Satz von Routinginformationen enthalten ist, mit dem ersten Eintrag, der in der Weiterleitungstabelle enthalten ist, basierend auf dem Vergleich, umfasst.

3. Nichtflüchtiges computerlesbares Speichermedium nach Anspruch 1,
das ferner das Markieren des ersten Netzwerk-Präfixes in der Routingtabelle als aktiv, und, basierend auf dem Vergleich, das Markieren des zweiten Netzwerk-Präfixes in der Routingtabelle als inaktiv umfasst.

4. Nichtflüchtiges computerlesbares Speichermedium nach Anspruch 1, das ferner Folgendes umfasst:
Speichern eines dritten Netzwerk-Präfixes und eines dritten Satzes von Routinginformationen, die mit dem dritten Netzwerk-Präfix verbunden sind, in der Routingtabelle,
wobei das dritte Netzwerk-Präfix durch ein viertes Netzwerk-Präfix, das in der Routingtabelle enthalten ist, abgedeckt wird; und
basierend auf dem Vergleichen des dritten Satzes von Routinginformationen mit einem vierten Satz von Routinginformationen, die mit dem vierten Netzwerk-Präfix verbunden sind:
Schreiben des dritten Netzwerk-Präfixes von der Routingtabelle in einen zweiten Eintrag in der Weiterleitungstabelle; und
Verbinden des dritten Satzes von Routinginformationen mit dem zweiten Eintrag.

5. Nichtflüchtiges computerlesbares Speichermedium nach Anspruch 4,
wobei weniger als eine Schwellenzahl von nächsten Sprüngen, die in dem dritten Satz von Routinginformationen enthalten sind, in dem vierten Satz von Routinginformationen enthalten sind.

6. Verfahren, Folgendes umfassend:
Speichern eines ersten Netzwerk-Präfixes und eines ersten Satzes von Routinginformationen, die mit dem ersten Netzwerk-Präfix verbunden sind, in einer Routingtabelle;
Schreiben des ersten Netzwerk-Präfixes in einen ersten Eintrag, der in einer Weiterleitungstabelle enthalten ist;
Bestimmen, dass das erste Netzwerk-Präfix ein mit einem zweiten Satz von Routinginformationen verbundenes zweites Netzwerk-Präfix abdeckt; und
Vergleichen des ersten Satzes von Routinginformationen mit dem zweiten Satz von Routinginformationen, um zu bestimmen, ob mehr als eine Schwellenzahl von nächsten Sprüngen, die in dem zweiten Satz von Routinginformationen enthalten sind, in dem ersten Satz von Routinginformationen enthalten sind;
in Reaktion auf den Vergleich:
wenn die Schwellenzahl von nächsten Sprüngen überschritten worden ist,
Komprimieren der Weiterleitungstabelle durch:
Nicht-Schreiben des zweiten Netzwerk-Präfixes in die Weiterleitungstabelle; oder
Entfernen des zweiten Netzwerk-Präfixes von der Weiterleitungstabelle; und
wenn die Schwellenzahl von nächsten Sprüngen nicht überschritten worden ist, Schreiben des zweiten Netzwerk-Präfixes von der Routingtabelle in die Weiterleitungstabelle.

7. Verfahren nach Anspruch 6,
das ferner das Verbinden des mindestens einen nächsten Sprungs mit dem in der Weiterleitungstabelle enthaltenen ersten Eintrag, basierend auf dem Bestimmen, dass der mindestens eine nächste Sprung nicht in dem ersten Satz von Routinginformationen enthalten ist, umfasst.

8. Verfahren nach Anspruch 6,
wobei der Vergleich angibt, dass alle nächsten Sprünge, die in dem ersten Satz von Routinginformationen enthalten sind, mit allen nächsten Sprüngen, die in dem zweiten Satz von Routinginformationen enthalten sind, übereinstimmen.

9. Verfahren nach Anspruch 6, ferner Folgendes umfassend:
Markieren des ersten Netzwerk-Präfixes in der Routingtabelle als aktiv;
Speichern des zweiten Netzwerk-Präfixes und des zweiten Satzes von Routinginformationen in der Routingtabelle; und
basierend auf dem Vergleich, Markieren des zweiten Netzwerk-Präfixes in der Routingtabelle als inaktiv.

10. Verfahren nach Anspruch 6, ferner Folgendes umfassend:
Speichern eines dritten Netzwerk-Präfixes und eines dritten Satzes von Routinginformationen, die mit dem dritten Netzwerk-Präfix verbunden sind, in der Routingtabelle;
Bestimmen, dass das dritte Netzwerk-Präfix durch ein viertes Netzwerk-Präfix, das in der Routingtabelle enthalten ist, abgedeckt wird; und
basierend auf dem Bestimmen, dass weniger als alle des dritten Satzes von Routinginformationen mit einem vierten Satz von Routinginformationen, die mit dem vierten Netzwerk-Präfix verbunden sind, übereinstimmen:
Schreiben des dritten Netzwerk-Präfixes in einen zweiten Eintrag in der Weiterleitungstabelle; und
Verbinden des dritten Satzes von Routinginformationen mit dem zweiten Eintrag.

11. Verfahren nach Anspruch 10,
wobei weniger als eine Schwellenzahl von nächsten Sprüngen, die in dem dritten Satz von Routinginformationen enthalten sind, in dem vierten Satz von Routinginformationen enthalten sind.

12. Verfahren nach Anspruch 6, ferner Folgendes umfassend:
Schreiben eines dritten Netzwerk-Präfixes in einen zweiten Eintrag, der in einer Weiterleitungstabelle enthalten ist;
Bestimmen, dass ein viertes Netzwerk-Präfix durch das dritte Netzwerk-Präfix abgedeckt wird; und
in Reaktion auf das Bestimmen, dass mindestens ein Teil eines dritten Satzes von Routinginformationen, die mit dem dritten Netzwerk-Präfix verbunden sind, mit mindestens einem Teil eines vierten Satzes von Routinginformationen, die mit dem vierten Netzwerk-Präfix verbunden sind, übereinstimmt, Verbinden des vierten Satzes von Routinginformationen mit dem zweiten Eintrag.

13. Netzwerkgerät, das Folgendes umfasst:
einen ersten Speicher, der eine Routingtabelle und eine Netzwerkanwendung speichert;
einen zweiten Speicher, der eine
Weiterleitungstabelle speichert; und
einen Prozessor, der mit dem ersten Speicher und dem zweiten Speicher gekoppelt ist,
wobei, wenn sie durch den Prozessor ausgeführt wird, die Netzwerkanwendung den Prozessor zu Folgendem veranlasst:
Speichern eines ersten Netzwerk-Präfixes und eines ersten Satzes von Routinginformationen, die mit dem ersten Netzwerk-Präfix verbunden sind, in der Routingtabelle;
Schreiben des ersten Netzwerk-Präfixes von der Routingtabelle in einen ersten Eintrag, der in der Weiterleitungstabelle enthalten ist;
Speichern eines zweiten Netzwerk-Präfixes und eines zweiten Satzes von Routinginformationen, die mit dem zweiten Netzwerk-Präfix verbunden sind, in der Routingtabelle,
wobei das zweite Netzwerk-Präfix durch das erste Netzwerk-Präfix abgedeckt wird;
Schreiben des zweiten Netzwerk-Präfixes von der Routingtabelle in einen zweiten Eintrag, der in der Weiterleitungstabelle enthalten ist;
Vergleichen des ersten Satzes von Routinginformationen mit dem zweiten Satz von Routinginformationen, um zu bestimmen, ob mehr als eine Schwellenzahl von nächsten Sprüngen, die in dem zweiten Satz von Routinginformationen enthalten sind, in dem ersten Satz von Routinginformationen enthalten sind; und
in Reaktion auf den Vergleich,
wenn die Schwellenzahl von nächsten Sprüngen überschritten worden ist, Komprimieren der Weiterleitungstabelle durch Entfernen des zweiten Eintrags von der Weiterleitungstabelle; und
wenn die Schwellenzahl von nächsten Sprüngen nicht überschritten worden ist, Aktualisieren der Weiterleitungstabelle, um das zweite Netzwerk-Präfix einzubeziehen.

14. Netzwerkgerät nach Anspruch 13,
wobei der Prozessor ferner dazu ausgelegt ist, den mindestens einen nächsten Sprung auf der Basis des Vergleichs mit dem ersten Eintrag zu verbinden.

15. Netzwerkgerät nach Anspruch 13,
wobei der zweite Speicher einen inhaltsadressierbaren Speicher umfasst und der erste Eintrag mit einem Knoten eines Radixbaums verbunden ist.

## Revendications

1. Support non transitoire de stockage pouvant être lu par un ordinateur incluant des instructions qui, lorsqu'elles sont exécutées par un processeur, amènent le processeur à effectuer les étapes suivantes :
le stockage d'un premier préfixe de réseau et d'un premier ensemble d'informations de routage associé avec le premier préfixe de réseau dans une table de routages,
l'écriture du premier préfixe de réseau à partir de la table de routages sur une première entrée incluse dans une table de transferts,
le stockage d'un deuxième préfixe de réseau et d'un deuxième ensemble d'informations de routage associé avec le deuxième préfixe de réseau dans la table de routages, le deuxième préfixe de réseau étant couvert par le premier préfixe de réseau,
la comparaison du premier ensemble d'informations de routage au deuxième ensemble d'informations de routage afin de déterminer s'il existe plus d'un certain nombre seuil de sauts suivants inclus dans le deuxième ensemble d'informations de routage qui sont inclus dans le premier ensemble d'informations de routage,
en réponse à la comparaison :
lorsque le nombre seuil de sauts suivants a été dépassé,
la compression de la table de transferts :
en n'écrivant pas le deuxième préfixe de réseau de la table de routages sur la table de transferts, ou
en supprimant le deuxième préfixe de réseau de la table de transferts, et
lorsque le nombre seuil de sauts suivants n'a pas été dépassé, l'écriture du deuxième préfixe de réseau de la table de routages sur la table de transferts.

2. Support non transitoire de stockage pouvant être lu par un ordinateur selon la revendication 1, comprenant en outre l'association du ou des sauts suivants inclus dans le deuxième ensemble d'informations de routage avec la première entrée incluse dans la table de transferts sur la base de la comparaison.

3. Support non transitoire de stockage pouvant être lu par un ordinateur selon la revendication 1, comprenant en outre le marquage du premier préfixe de réseau comme actif dans la table de routages et, sur la base de la comparaison, le marquage du deuxième préfixe de réseau comme inactif dans la table de routages.

4. Support non transitoire de stockage pouvant être lu par un ordinateur selon la revendication 1, comprenant en outre :
le stockage d'un troisième préfixe de réseau et d'un troisième ensemble d'informations de routage associées avec le troisième préfixe de réseau dans la table de routages, le troisième préfixe de réseau étant couvert par un quatrième préfixe de réseau inclus dans la table de routages, et
sur la base de la comparaison du troisième ensemble d'informations de routage à un quatrième ensemble d'informations de routage associé avec le quatrième préfixe de réseau :
l'écriture du troisième préfixe de réseau à partir de la table de routages sur une seconde entrée dans la table de transferts, et
l'association du troisième ensemble d'informations de routage à la seconde entrée.

5. Support non transitoire de stockage pouvant être lu par un ordinateur selon la revendication 4, dans lequel il y a moins d'un certain nombre seuil de sauts suivants inclus dans le troisième ensemble d'informations de routage qui sont inclus dans le quatrième ensemble d'informations de routage.

6. Procédé comprenant :
le stockage d'un premier préfixe de réseau et d'un premier ensemble d'informations de routage associé avec le premier préfixe de réseau dans une table de routages,
l'écriture du premier préfixe de réseau à partir de la table de routages sur une première entrée incluse dans une table de transferts,
la détermination de ce que le premier préfixe de réseau couvre un deuxième préfixe de réseau associé avec le ensemble d'informations de routage, et
la comparaison du premier ensemble d'informations de routage au deuxième ensemble d'informations de routage afin de déterminer s'il existe plus d'un certain nombre seuil de sauts suivants inclus dans le deuxième ensemble d'informations de routage qui sont inclus dans le premier ensemble d'informations de routage,
en réponse à la comparaison :
lorsque le nombre seuil de sauts suivants a été dépassé,
la compression de la table de transferts :
en n'écrivant pas le deuxième préfixe de réseau de la table de routages sur la table de transferts, ou
en supprimant le deuxième préfixe de réseau de la table de transferts, et
lorsque le nombre seuil de sauts suivants n'a pas été dépassé, l'écriture du deuxième préfixe de réseau de la table de routages sur la table de transferts.

7. Procédé selon la revendication 6, comprenant en outre l'association du ou des sauts suivants avec la première entrée incluse dans la table de transferts sur la base de la détermination de ce que le ou les sauts suivants ne sont pas inclus dans le premier ensemble d'informations de routage.

8. Procédé selon la revendication 6, dans lequel la comparaison indique que tous les sauts suivants inclus dans le premier ensemble d'informations de routage correspondent à tous les sauts suivants inclus dans le deuxième ensemble d'informations de routage.

9. Procédé selon la revendication 6, comprenant en outre :
le marquage du premier préfixe de réseau comme actif dans la table de routages,
le stockage du deuxième préfixe de réseau et du deuxième ensemble d'informations de routage dans la table de routages, et
sur la base de la comparaison, le marquage du deuxième préfixe de réseau comme inactif dans la table de routages.

10. Procédé selon la revendication 6, comprenant en outre :
le stockage d'un troisième préfixe de réseau et d'un troisième ensemble d'informations de routage associé avec le troisième préfixe de réseau dans la table de routages,
la détermination de ce que le troisième préfixe de réseau est couvert par un quatrième préfixe de réseau inclus dans la table de routages, et
sur la base de la détermination de ce que moins de la totalité du troisième ensemble d'informations de routage correspond à un quatrième ensemble d'informations de routage associé avec le quatrième préfixe de réseau,
l'écriture du troisième préfixe de réseau sur une seconde entrée dans la table de transferts, et
l'association du troisième ensemble d'informations de routage à la seconde entrée.

11. Procédé selon la revendication 10, dans lequel il y a moins d'un certain nombre seuil de sauts suivants inclus dans le troisième ensemble d'informations de routage qui sont inclus dans le quatrième ensemble d'informations de routage.

12. Procédé selon la revendication 6, comprenant en outre :
l'écriture d'un troisième préfixe de réseau sur une seconde entrée incluse dans une table de transferts,
la détermination de ce qu'un quatrième préfixe de réseau est couvert par le troisième préfixe de réseau, et
en réponse à la détermination de ce qu'au moins une partie d'un troisième ensemble d'informations de routage associé avec le troisième préfixe de réseau correspond au moins à une partie d'un quatrième ensemble d'informations de routage associé avec le quatrième préfixe de réseau, l'association du quatrième ensemble d'informations de routage à la seconde entrée.

13. Dispositif de mise en réseau comprenant :
une première mémoire stockant une table de routages et une application de mise en réseau,
une seconde mémoire stockant une table de transferts, et
un processeur couplé à la première mémoire et à la seconde mémoire, dans lequel lorsqu'elle est exécutée par le processeur, l'application de mise en réseau amène le processeur à :
stocker un premier préfixe de réseau et un premier ensemble d'informations de routage associé avec le premier préfixe de réseau dans la table de routages,
écrire le premier préfixe de réseau à partir de la table de routages sur une première entrée incluse dans la table de transferts,
stocker un deuxième préfixe de réseau et un deuxième ensemble d'informations de routage associé au deuxième préfixe de réseau dans la table de routages, le deuxième préfixe de réseau étant couvert par le premier préfixe de réseau,
écrire le second préfixe de réseau à partir de la table de routages sur une seconde entrée incluse dans la table de transferts,
comparer le premier ensemble d'informations de routage au deuxième ensemble d'informations de routage afin de déterminer s'il existe plus d'un certain nombre seuil de sauts suivants inclus dans le deuxième ensemble d'informations de routage qui sont inclus dans le premier ensemble d'informations de routage, et
en réponse à la comparaison :
lorsque le nombre seuil de sauts suivants a été dépassé,
compresser la table de transferts en supprimant la seconde entrée de la table de transferts, et
lorsque le nombre seuil de sauts suivants n'a pas été dépassé, mettre à jour la table de transferts pour inclure le deuxième préfixe de réseau.

14. Dispositif de mise en réseau selon la revendication 13, dans lequel le processeur est en outre configuré pour associer le ou les sauts suivants avec la première entrée sur la base de la comparaison.

15. Dispositif de mise en réseau selon la revendication 13, dans lequel la seconde mémoire comprend une mémoire adressable par le contenu, et la première entrée est associée à un nœud d'une arborescence de base.
